# FASCICULE DE BREVET EUROPEEN

(11) **EP 0 398 773 B1**
(45) Date de publication et mention de la délivrance du brevet: **17.08.1994**
(21) Numéro de dépôt: 90401043.6
(22) Date de dépôt: 18.04.1990
(51) Int. Cl.: H04J 3/06, H04Q 7/04

(54) **Procédé de pseudo-synchronisation d'un réseau de communication à multiplexage dans le temps et applications.**
Pseudo-Synchronisierungsverfahren für ein Zeitmultiplexiertes Übertragungsnetz und Verwendungen
Pseudosynchronisation-method for a time division multiplexed communication network and use of same

(30) Priorité: 25.04.1989 FR 8905469
(43) Date de publication de la demande: 22.11.1990
(73) Titulaire: MATRA COMMUNICATION, 29101 Quimper (FR)
(72) Inventeur: Dornstetter, Jean-Louis, F-78150 Roquencourt (FR); Mouly, Michel, F-92170 Vanves (FR)
(74) Mandataire: Fruchard, Guy

(56) Documents cités:
- EP-A- 0 241 565
- EP-A- 0 286 614
- PROCEEDINGS IEEE INFOCOM'86, 5TH ANNUAL CONFERENCE, COMPUTER AND COMMUNICATIONSINTEGRATION DESIGN, ANALYSIS, MANAGEMENT, Miami, FLorida, 8-10 avril1986, pages 636-640, IEEE, New York, US; S.-Z. SU et al.: "Time synchronization and ranging for multihop mobile radio networks"

## Description

La présente invention concerne un procédé de pseudo-synchronisation d'un réseau de communication à multiplexage dans le temps et ses applications, notamment en radiotéléphonie pour la synchronisation d'une station mobile avec une station fixe lors d'un transfert d'une communication entre la station mobile et une première station fixe vers une communication entre la station mobile et une seconde station fixe, ou pour la localisation géographique d'une station mobile soit par des stations fixes soit par la station mobile elle-même.

On connaît des réseaux de radiocommunication à multiplexage dans le temps comprenant une série de stations fixes individuellement synchronisées avec une ou plusieurs stations mobiles au moyen de signaux d'asservissement dans le temps. Le multiplexage dans le temps suppose que chacune des stations mobiles en communication avec une station fixe dispose de fenêtres de temps pendant lesquelles elle peut émettre ses messages vers la station fixe. Afin de synchroniser les émissions de message par la station mobile avec les instant où la fenêtre de temps correspondante est disponible au niveau de la station fixe, la station fixe émet des signaux de synchronisation lui permettant de mesurer le temps de propagation d'un signal entre elle-même et la station mobile et de commander en conséquence les moyens d'émission de la station mobile.

Dans le cas le plus général, les stations fixes ne sont pas synchronisées entre elles de sorte que lorsque le mobile se déplace et passe d'une communication avec une station fixe à une communication avec une autre station fixe, il est nécessaire de procéder à uns synchronisation de la station mobile avec la nouvelle station fixe avant de pouvoir assurer la communication. Par ailleurs, dans le cas d'un réseau de radiotéléphonie, la synchronisation de la-station mobile avec la station fixe est réalisée en envoyant les signaux de synchronisation sur le canal servant à la communication téléphonique elle-même de sorte que la conversation entre deux utilisateurs est interrompue pendant le temps de synchronisation.

On a, certes, envisagé de synchroniser les stations fixes entre elles afin de pouvoir effectuer le transfert de communication d'une station fixe à une autre sans interrompre la conversation téléphonique. Toutefois, une telle synchronisation des stations fixes entre elles est extrêmement onéreuse et ne peut être obtenue de façon précise dans le cas d'un réseau de grande surface en raison de l'accumulation des erreurs résultant d'une synchronisation en chaîne.

Par ailleurs, on connaît du document EP-A-241 565 une relation entre les temps de propagation d'une station mobile à des stations fixes, le décalage en émission à ces stations fixes et le décalage en réception à la station mobile, mais cette relation est utilisée à la seule fin de déterminer la station fixe qui est la plus proche de la station mobile.

Un but de la présente invention est de proposer un procédé de pseudo-synchronisation des stations fixes permettant de diminuer le temps de synchronisation d'une station mobile avec une station fixe sans augmenter de façon notable le coût d'installation et de fonctionnement du réseau.

En vue de la réalisation de ce but, on prévoit selon l'invention un procédé de pseudo synchronisation d'un réseau de communication à multiplexage dans le temps comprenant une série de stations fixes individuellement synchronisées avec des stations mobiles au moyen de signaux d'asservissement dans le temps, caractérisé en ce qu'il comporte les étapes de : mesurer à une station mobile le décalage de réception TMij par cette station mobile de signaux de synchronisation en provenance d'une première et d'une seconde station fixe, mesurer à la première station le temps de propagation ti d'un signal de synchronisation de la première station fixe jusqu'à la station mobile, transmettre le décalage de réception TMij et le temps de propagation ti de la station mobile à la seconde station fixe, mesurer à la seconde station fixe le temps de propagation tj d'un signal de synchronisation de la seconde station fixe à la station mobile, et calculer et stocker à la seconde station fixe le décalage d'émission TRij entre les signaux de synchronisation de la première et de la seconde station fixe, selon la relation TRij = TMij + ti - tj.

Ainsi, en utilisant les moyens déjà disponibles au niveau d'un réseau de communication à multiplexage dans le temps on obtient une information permettant de connaître le décalage d'émission des signaux de synchronisation d'une seconde station fixe par rapport à une première station fixe.

Selon une première application du procédé de pseudo -synchronisation selon l'invention, on utilise le décalage d'émission TR dans un procédé de synchronisation d'une station mobile avec une station fixe lors d'un transfert d'une communication entre la station mobile et une première station fixe vers une communication entre la station mobile et une seconde station fixe, comportant les étapes de : transmettre à la station mobile le décalage d'émission TRij préalablement calculé entre les signaux de synchronisation de la première et la seconde station fixes ainsi que le temps de propagation ti du signal de synchronisation de la première station fixe vers la station mobile, mesurer le décalage de réception TMij entre les signaux de synchronisation de la première et de la seconde station fixe, calculer le temps de propagation tj du signal de synchronisation de la seconde station fixe vers le mobile selon la relation tj = ti - TRij + TMij, et asservir l'émission de la station mobile vers la seconde station fixe au temps de propagation tj et au décalage d'émission TRij. Ainsi la station mobile détermine l'instant où elle doit émettre vers la seconde station fixe sans attendre d'avoir reçu le premier signal de synchronisation de la seconde station fixe.

De préférence, le procédé de synchronisation d'une station mobile avec une station fixe selon l'invention comporte en outre les étapes de : envoyer vers la seconde station fixe un signal TMij + ti égal à la somme du décalage de réception TMij mesuré et du temps de propagation ti reçu, mesurer à la seconde station fixe le temps de propagation de tj du signal de synchronisation de la seconde station fixe vers la station mobile, soustraire celui-ci de la somme reçue et stocker le résultat TRij obtenu. Ainsi, lors de chaque transfert de communication entre deux stations fixes on met à jour dans l'une des stations fixes l'information sur le décalage d'émission TR afin de l'utiliser lors du transfert suivant en sens inverse en liaison avec les déplacements de l'une des stations mobiles dans le réseau.

Selon une autre application de l'invention, le procédé de pseudo-synchronisation du réseau est utilisé dans un procédé de localisation géographique d'une station mobile comportant les étapes de : transmettre à une première station fixe une valeur mesurée à la station mobile du décalage de réception TMij des signaux de synchronisation provenant de la première et d'au moins une seconde station fixe, mesurer à la première station fixe le temps de propagation ti du signal de synchronisation de la première station fixe à la station mobile, calculer à la première station fixe les temps de propagation tj du signal de synchronisation des secondes stations fixes à la station mobile en utilisant le décalage d'émission TRij stocké à partir d'un calcul précédent, selon la relation : tj = TMij + ti - TRij, et calculer la position du mobile à partir des temps de propagation ti et tj et de coordonnées géographiques de la première et des secondes stations fixes.

Ainsi la connaissance de la position de la station mobile permet de prendre des décisions telles que par exemple le moment du transfert de la liaison téléphonique entre une station fixe et la station mobile vers une liaison téléphonique entre une autre station fixe et la station mobile.

Selon encore une autre application du procédé de pseudo-synchronisation selon l'invention, celui-ci est utilisé dans un procédé de localisation géographique d'une station mobile par elle-même comprenant les étapes de : transmettre à la station mobile les coordonnées géographiques d'une série de stations fixes ainsi que les décalages d'émission TRij des stations fixes entre elles, mesurer à la station mobile les décalages de réception TMij des signaux de synchronisation à partir de couples de stations fixes, calculer les différences de temps de propagation de ti - tj depuis les stations fixes vers la station mobile, selon la relation : ti - tj = TRij - TMij, et calculer la position de la station mobile à partir des coordonnées géographiques des stations fixes et des différences de temps de propagation. Ainsi, la station mobile peut déterminer par elle-même sa localisation géographique et utiliser celle-ci, par exemple pour le centrage d'une carte dans le cadre d'un guidage assisté par cartographie automatique.

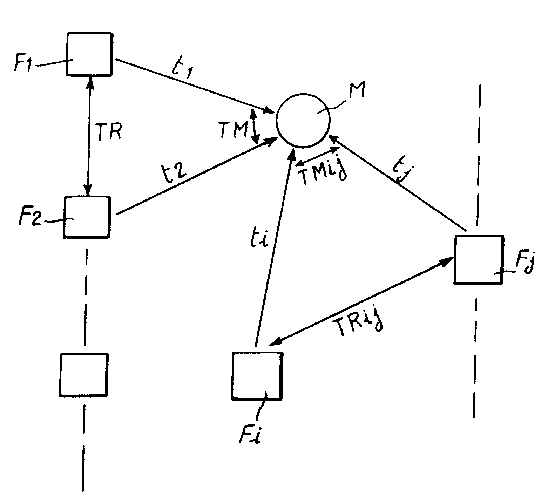

D'autres caractéristiques et avantages de l'invention apparaîtront à la lecture de la description qui suit de modes de mise en oeuvre particuliers de l'invention en liaison avec la figure unique ci-jointe qui représente une vue schématique partielle d'un réseau de radiocommunication à multiplexage dans le temps.

D'une façon connue en soi, le réseau comporte une série de stations fixes F1, F2 ... Fi... Fj..., réparties sur une surface devant être couverte par le réseau. Le réseau comporte également une série de stations mobiles M, par exemple des véhicules équipés d'un radio téléphone, dont une seule à été représentée sur la figure.

Chacune des stations fixes émet de façon périodique des signaux de synchronisation dont le temps de propagation vers une station mobile est respectivement notée t1, t2.... ti... tj...

Lorsqu'une communication est établie pour la transmission d'une conversation téléphonique, la station mobile est en communication avec l'une des stations fixes et la communication est transférée vers une autre station fixe lorsque le besoin s'en fait sentir en raison des déplacements de la station mobile, l'instant du transfert étant déterminé d'une façon connue par la station fixe avec laquelle la station mobile est en communication. Quand la station mobile est en communication avec une station fixe, elle reçoit les signaux de synchronisation de celle-ci et lui renvoie immédiatement un signal en réponse de sorte que la station fixe détermine le temps de propagation du signal vers la station mobile et informe la station mobile de ce temps de propagation pour avancer ou retarder l'instant d'émission du message téléphonique émis par la station mobile afin que celui-ci soit reçu par la station fixe au moment où elle dispose d'une fenêtre de temps de réception affectée à la station mobile considérée. Parallèlement, bien que les autres stations fixes émettent elles aussi des signaux de synchronisation vers la station mobile, elles ne reçoivent pas de signal en retour de la part de la station mobile et ne sont donc en mesure de calculer ni le temps de propagation de leur propre signal de synchronisation vers la station mobile, ni le décalage de temps qui les sépare des stations fixes avoisinantes.

Dans les systèmes existants, lorsque la communication entre une station fixe, par exemple F1, et la station mobile est transférée pour s'établir entre une autre station fixe, par exemple F2, et la station mobile, il est donc nécessaire d'attendre que F2 ait calculé le temps de propagation de temps t2 et en ait informé la station mobile M avant de pouvoir poursuivre l'émission du message téléphonique. Bien que très brève (environ un quart de seconde), cette interruption est néanmoins perceptible par les utilisateurs.

Le procédé de pseudo-synchronisation des stations fixes va maintenant être décrit simultanément au procédé de synchronisation d'une station mobile avec une station fixe lors d'un transfert de communication en raison de l'imbrication de ces deux procédés dans le mode de mise en oeuvre préféré. Cette description va être faite à propos du transfert d'une communication de la station fixe F1 vers la station fixe F2 bien que ce transfert puisse s'effectuer de la même façon entre deux stations quelconques du réseau situées à proximité de la station mobile.

Selon l'invention, on prévoit que la station mobile se porte de temps à autre à l'écoute des signaux de synchronisation en provenance des stations fixes voisines vers lesquelles un transfert est susceptible de se produire. On remarquera que cette mise à l'écoute peut être extrêmement brève puisqu'il s'agit pour la station mobile de noter simplement l'instant de réception d'un signal de synchronisation en provenance d'une station fixe avec laquelle elle n'est pas en communication, et non de recevoir un message l'informant du temps de propagation de ce signal de synchronisation.

Dans le cas envisagé, la station mobile M est en communication avec la station fixe F1 et se met de temps à autre à l'écoute du signal de synchronisation provenant de la station fixe F2. Parallèlement, elle reçoit bien entendu le signal de synchronisation provenant de la station fixe F1. La station mobile M effectue ainsi la mesure du décalage de réception TM entre les signaux de synchronisation provenant de F1 et les signaux de synchronisation provenant de F2. Cette valeur de TM est mise à jour chaque fois que la mesure est effectuée afin d'être d'actualité lorsque le transfert de communication de F1 à F2 est effectué.

Lors du transfert de communication de F1 à F2, la station fixe F1 envoit un message de transfert à la station mobile en lui indiquant d'une part la nouvelle station fixe avec laquelle la station mobile va être en communication et d'autre part le décalage d'émission TR entre les instants d'émission des signaux de synchronisation par F1 et F2, ce décalage d'émission TR ayant été calculé par F1 lors d'un transfert précédent ainsi qu'il sera vu ci-dessous. Ayant en mémoire TM qu'elle mesure de temps à autre, t1 qui lui a été périodiquement communiqué par F 1, et TR qui lui est communiqué par F1 au moment du transfert, la station mobile M est en mesure de calculer t2 au moyen de la relation t2 = TM + t1 - TR et donc de déterminer l'instant d'émission du premier message téléphonique vers F2 sans attendre d'avoir reçu de F2 l'information concernant la valeur exacte de t2. Une fois la communication établie, la station fixe F2 envoit vers la station mobile M l'information concernant la valeur réelle de t2 et une correction est alors progressivement opérée suivant le cycle habituel.

Simultanément au basculement de la communication vers la nouvelle station fixe F2, la station mobile M transmet à celle-ci la valeur du décalage de réception TM et du dernier temps de propagation t1 dont elle avait connaissance. Etant à même de mesurer le temps de propagation t2, la station fixe F2 peut donc calculer le décalage d'émission TR à l'instant du transfert par application de la relation TR = TM + t1 - t2 et stocker cette valeur du décalage d'émission TR en vue d'en informer ultérieurement une station mobile lors d'un transfert de communication de la station fixe F2 vers la station fixe F1. En pratique, pour minimiser le temps d'interruption de la communication téléphonique, la station mobile M envoit de préférence vers la station fixe F2 un message unique lui donnant la valeur TM + t1.

On constate que dans le mode de mise en oeuvre préféré de l'invention, une station fixe est informée du décalage d'émission TR avec une autre station fixe seulement lors d'un transfert de communication depuis cette station fixe. Ce mode de mise en oeuvre est préféré car il est évite une interruption trop fréquente de la conversation téléphonique. Dans le cas où la valeur du décalage d'émission TR est trop ancienne pour permettre une synchronisation anticipée efficace, on revient au procédé habituel consistant à attendre le signal de synchronisation de la nouvelle station fixe.

Le procédé de pseudo-synchronisation selon l'invention peut également être appliqué dans un procédé de localisation géographique d'une station mobile par une station fixe. Dans ce cas, la station mobile transmet à une première station fixe, par exemple la station fixe Fi une valeur mesurée à la station mobile du décalage de réception TMij des signaux de synchronisation provenant de la station fixe Fi et d'une seconde station fixe Fj.

Par ailleurs, on mesure à la station fixe Fi le temps de propagation ti du signal de synchronisation de la station fixe Fi à la station mobile M. Il est alors possible de calculer à la station fixe Fi la valeur tj du temps de propagation du signal de synchronisation de la station fixe Fj à la station mobile M en utilisant le décalage d'émission TRij stocké à la station fixe Fi à partir d'un calcul précédent, dans la relation : tj = TMij + ti - TRij, et de calculer ensuite la position géographique du mobile en utilisant les algorithmes habituels pour la localisation d'un point mobile à partir de la connaissance des coordonnées de deux points fixes et de la distance séparant ces points fixes du point mobile. Pour une meilleure précision de la localisation on calcule la distance du mobile par rapport à plus de deux stations fixes en réitérant le procédé ci-dessus. La connaissance de la position du mobile peut être utilisée en particulier pour décider de l'instant de transfert d'une communication d'une station fixe à une autre station fixe.

Bien entendu l'invention n'est pas limitée aux modes de mise en oeuvre décrits et on peut y apporter des variantes de réalisation sans sortir du cadre de l'invention. En particulier, la combinaison de la localisation géographique et des radiocommunications peut être utilisée pour un service de recherche de personnes perdues simplement porteuses d'un petit émetteur-récepteur portatif permettant de les localiser en utilisant les stations servant habituellement à la radiocommunication.

## Revendications

1. Procédé de pseudo synchronisation d'un réseau de communication à multiplexage dans le temps comprenant une série de stations fixes individuellement synchronisées avec des stations mobiles au moyen de signaux d'asservissement dans le temps, caractérisé en ce qu'il comporte les étapes de : mesurer à une station mobile (M) le décalage de réception TMij par cette station mobile (M) de signaux de synchronisation en provenance d'une première et d'une seconde station fixe (Fi, Fj), mesurer à la première station (Fi) le temps de propagation ti d'un signal de synchronisation de la première station fixe jusqu'à la station mobile (M), transmettre le décalage de réception TMij et le temps de propagation ti de la station mobile (M) à la seconde station fixe (Fj), mesurer à la seconde station fixe (Fj) le temps de propagation tj d'un signal de synchronisation de la seconde station fixe à la station mobile (M), et calculer et stocker à la seconde station fixe le décalage d'émission TRij entre les signaux de synchronisation de la première et de la seconde station fixe, selon la relation : TRij = TMij + ti - tj.

2. Procédé de synchronisation d'une station mobile (M) avec une station fixe (Fj) lors d'un transfert d'une communication entre la station mobile et une première station fixe (Fi) vers une communication entre la station mobile et une seconde station fixe (Fj) appartenant à un réseau de radiocommunication à multiplexage dans le temps mettant en oeuvre le procédé de pseudo-synchronisation selon la revendication 1, caractérisé en ce qu'il comporte les étapes de : transmettre à la station mobile (M) le décalage d'émission TRij préalablement calculé entre les signaux de synchronisation de la première et la seconde station fixes ainsi que le temps de propagation ti du signal de synchronisation de la première station fixe vers la station mobile, mesurer le décalage de réception TMij entre les signaux de synchronisation de la première et de la seconde station fixe, calculer le temps de propagation tj du signal de synchronisation de la seconde station fixe vers la station mobile, selon la relation : tj = ti - TRij + TMij et asservir l'émission de la station mobile vers la seconde station fixe au temps de propagation tj et au décalage d'émission TRij.

3. Procédé selon la revendication 2, caractérisé en ce qu'il comporte en outre l'étape d'envoyer dans la seconde station fixe un signal TMij + ti égal à la somme du décalage de réception TMij mesuré et du temps de propagation ti reçu, mesurer à la seconde station fixe (Fj) le temps de propagation tj du signal de synchronisation de la seconde station fixe vers la station mobile, soustraire celui-ci par calcul de la somme reçue et stocker le résultat TRij obtenu.

4. Procédé de localisation géographique d'une station mobile d'un réseau de communication à multiplexage dans le temps mettant en oeuvre le procédé de pseudo-synchronisation selon la revendication 1, caractérisé en ce qu'il comporte les étapes de : transmettre à une première station fixe (Fi) une valeur mesurée à la station mobile du décalage de réception TMij des signaux de synchronisation provenant de la première et d'au moins deux secondes stations fixes, mesurer à la première station fixe (Fi) le temps de propagation ti du signal de synchronisation de la première station fixe à la station mobile, calculer à la première station fixe les temps de propagation tj du signal de synchronisation des secondes stations fixes (Fj) à la station mobile en utilisant le décalage d'émission TRij stocké à calcul précédent, selon la relation : tj = TMij + ti - TRij, et calculer la position du mobile à partir des temps de propagation ti et tj et de coordonnées géographiques de la première et des secondes stations fixes.

5. Procédé de localisation géographique d'une station mobile d'un réseau de communication à multiplexage dans le temps mettant en oeuvre le procédé de pseudo-synchronisation selon la revendication 1, caractérisé en ce qu'il comporte les étapes de : transmettre à la station mobile les coordonnées géographiques d'une série d'au moins trois stations fixes (F1, F2... fi, fj...) ainsi que les décalages d'émission TRIJ des stations fixes entre elles, mesurer à la station mobile les décalages de réception TMij des signaux de synchronisation à partir de couples de stations fixes (Fi, Fj), calculer les différences de temps de propagation ti - tj depuis les stations fixes à la station mobile selon la relation ti - tj = TRij - TMij et calculer la position de la station mobile à partir des coordonnées géographiques des stations fixes et des différences de temps de propagation.

## Patentansprüche

1. Verfahren zur Pseudo-Synchronisation eines Zeitmultiplex-Kommunikationsnetzes, das eine Reihe von ortsfesten Stationen umfaßt, die mit Hilfe von Zeitsteuersignalen individuell mit Mobilstationen synchronisiert sind, gekennzeichnet durch die folgenden Schritte:
Messen der Verschiebung TMij, mit welcher aus einer ersten und aus einer zweiten ortsfesten Station (Fi, Fj) stammende Synchronisationssignale von einer Mobilstation (M) empfangen werden, an dieser Mobilstation (M);
Messen der Laufzeit ti eines Synchronisationssignals von der ersten ortsfesten Station bis zur Mobilstation (M) an der ersten Station (Fi);
Übermitteln der Verschiebung TMij des Empfangs und der Laufzeit ti von der Mobilstation (M) an die zweite ortsfeste Station (Fj);
Messen der Laufzeit tj eines Synchronisationssignals von der zweiten ortsfesten Station zur Mobilstation (M) an der zweiten ortsfesten Station (Fj) und
Berechnen und Speichern der Verschiebung TRij der Signalgebung zwischen den Synchronisationssignalen der ersten und der zweiten ortsfesten Station an der zweiten ortsfesten Station gemäß der Beziehung:
TRij = TMij + ti - tj.

2. Verfahren zur Synchronisation einer Mobilstation (M) mit einer ortsfesten Station (Fj) bei der Übergabe einer Gesprächsverbindung zwischen der Mobilstation und einer ersten ortsfesten Station (Fi) an eine Verbindung zwischen der Mobilstation und einer zu einem Zeitmultiplex-Funkkommunikationsnetz gehörenden zweiten ortsfesten Station (Fj) unter Anwendung des Verfahrens zur Pseudo-Synchronisation gemäß Anspruch 1, dadurch gekennzeichnet, daß dieses die folgenden Schritte umfaßt:
Übermitteln der im voraus berechneten Verschiebung TRij der Signalgebung zwischen den Synchronisationssignalen der ersten und der zweiten ortsfesten Station sowie der Laufzeit ti, die das Synchronisationssignal von der ersten ortsfesten Station zur Mobilstation benötigt, zu der Mobilstation (M);
Messen der Verschiebung TMij des Empfangs zwischen den Synchronisationssignalen der ersten und der zweiten ortsfesten Station;
Berechnen der Laufzeit tj des Synchronisationssignals der zweiten ortsfesten Station zur Mobilstation gemäß der Beziehung: tj = ti - TRij + TMij und
Steuern der Signalgebung von der Mobilstation zur zweiten ortsfesten Station abhängig von der Laufzeit tj und von der Verschiebung TRij der Signalgebung.

3. Verfahren nach Anspruch 2, dadurch gekennzeichnet, daß dieses ferner den folgenden Schritt umfaßt:
Senden eines Signals TMij + ti, das gleich der Summe aus der gemessenen Verschiebung TMij des Empfangs und der empfangenen Laufzeit ti ist, in der zweiten ortsfesten Station, Messen der Laufzeit tj des Synchronisationssignals von der zweiten ortsfesten Station zur Mobilstation an der zweiten ortsfesten Station (Fj), rechnerisches Subtrahieren derselben von der übermittelten Summe und Speichern des ermittelten Ergebnisses TRij.

4. Verfahren zur geographischen Ortung einer Mobilstation eines Zeitmultiplex-Kommunikationsnetzes unter Anwendung des Verfahrens zur Pseudo-Synchronisation gemäß Anspruch 1, dadurch gekennzeichnet, daß dieses die folgenden Schritte umfaßt:
Übermitteln eines an der Mobilstation gemessenen Wertes der Verschiebung TMij des Empfangs von Synchronisationssignalen, die aus der ersten und aus wenigstens zwei zweiten ortsfesten Stationen stammen, an eine erste ortsfeste Station (Fi);
Messen der Laufzeit tj des Synchronisationssignals von der ersten ortsfesten Station (Fj) zu der Mobilstation an der ersten ortsfesten Station;
Berechnen der Laufzeit tj des Synchronisationssignals der zweiten ortsfesten Stationen (Fj) zur Mobilstation an der ersten ortsfesten Station unter Verwendung der bei der vorhergehenden Berechnung gespeicherten Verschiebung TRij der Signalgebung gemäß der Beziehung: tj = TMij + ti - TRij und Berechnen der Position des Mobilteils aus den Laufzeiten ti und tj und den geographischen Koordinaten der ersten und der zweiten ortsfesten Stationen.

5. Verfahren zur geographischen Ortung einer Mobilstation eines Zeitmultiplex-Kommunikationsnetzes unter Anwendung des Verfahrens zur Pseudo-Synchronisation gemäß Anspruch 1, dadurch gekennzeichnet, daß dieses die folgenden Schritte umfaßt:
Übermitteln der geographischen Koordinaten einer Reihe von wenigstens drei ortsfesten Stationen (F1, F2... fi, fj...) sowie der Verschiebungen TRIJ der Signalgebung der ortsfesten Stationen untereinander an die Mobilstation;
Messen der Verschiebungen TMij des Empfangs der Synchronisationssignale von Paaren ortsfester Stationen (Fi, Fj) an der Mobilstation;
Berechnen der Differenz ti - tj der Laufzeiten von den ortsfesten Stationen zur Mobilstation gemäß der Beziehung ti - tj = TRij - TMij und
Berechnen der Position der Mobilstation aus den geographischen Koordinaten der ortsfesten Stationen und der Laufzeitdifferenzen.

## Claims

1. A process for the pseudo-synchronisation of a time multiplexing communication network comprising a series of fixed stations individually synchronised with mobile stations by means of timing signals, characterised in that it comprises the following steps : measuring at a mobile station (M) the time shift TMij in reception by that mobile station (M) of synchronisation signals from a first and a second fixed stations, (Fi, Fj) measuring at the first station (Fi) the propagation time ti of a synchronisation signal from the first fixed station to the mobile station (M), transmitting the time shift in reception TMij and the propagation time ti from the mobile station (M) to the second fixed station (Fj), measuring at the second fixed station (Fj) the propagation time tj of a synchronisation signal from the second fixed station to the mobile station (M), and calculating and storing at the second fixed station the time shift TRij in transmission between the synchronisation signals from the first and second fixed stations in accordance with the relationship: TRij = TMij + ti - tj.

2. A process for the synchronisation of a mobile station (M) with a fixed station (Fj) when transferring a communication between the mobile station and a first fixed station (Fi) to a communication between the mobile station and a second fixed station (Fj) belonging to a time multiplexing radiocommunication network comprising means for carrying out the pseudo-synchronisation process as set forth in claim 1, characterised in that it comprises the following steps : transmitting to the mobile station (M) the previously calculated transmission time shift TRij between the synchronisation signals from the first and second fixed stations and the propagation time ti of the synchronisation signal from the first fixed station to the mobile station, measuring the reception time shift TMij between the synchronisation signals from the first and second fixed stations, calculating the propagation time tj of the synchronisation signal from the second fixed station to the mobile station, in accordance with the relationship: tj = ti - TRij + TMij and controlling transmission from the mobile station to the second fixed station in dependence on the propagation time tj and the transmission time shift TRij.

3. A process as set forth in claim 2 characterised in that it further comprises the step of sending in the second fixed station a signal TMij + ti equal to the sum of the measured reception time shift TMij and the received propagation time ti, measuring at the second fixed station (Fj) the propagation time tj of the synchronisation signal from the second fixed station to the mobile station, subtracting same by calculation from the received sum, and storing the result TRij obtained.

4. A process for geographically locating a mobile station of a time multiplexing communication network comprising means for carrying out the pseudo-synchronisation process as set forth in claim 1, characterised in that it comprises the following steps: transmitting to a first fixed station (Fi) a value measured at the mobile station of the reception time shift TMij in respect of the synchronisation signals from the first station and at least two second fixed station, measuring at the first fixed station (Fi) the propagation time ti of the synchronisation signal from the first fixed station to the mobile station, calculating at the first fixed station the propagation time tj of the synchronisation signal from the second fixed station (Fj) to the mobile station using the transmission time shift TRij stored in a preceding calculation, in accordance with the relationship: tj = TMij + ti - TRij, and calculating the position of the mobile station from the propagation times ti and tj and geographical co-ordinates of the first fixed station and the second fixed stations.

5. A process for geographically locating a mobile station of a time multiplexing communication network comprising means for carrying out the pseudo-synchronisation process as set forth in claim 1 characterised in that it comprises the following steps: transmitting to the mobile station the geographical coordinates of a series of at least three fixed stations (F1, F2... fi, fj...) and the transmission time shifts TRij of the fixed stations relative to each other, measuring at the mobile station the reception time shifts TMij of the synchronisation signals from pairs of fixed stations (Fi, Fj), calculating the differences in propagation times ti - tj from the fixed stations to the mobile station in accordance with the relationship ti - tj = TRij - TMij, and calculating the position of the mobile station from the geographical co-ordinates of the fixed stations and the propagation time differences.
